# EUROPÄISCHE PATENTSCHRIFT

(11) **EP 0 431 091 B1**
(45) Veröffentlichungstag und Bekanntmachung des Hinweises auf die Patenterteilung: **02.04.1997**
(21) Anmeldenummer: 90907031.0
(22) Anmeldetag: 17.05.1990
(51) Int. Cl.: C05G 3/10, B01J 2/30

(54) **VERFAHREN ZUR STAUBBINDUNG IN DÜNGER-GRANULATEN**
PROCESS FOR BINDING DUST IN FERTILIZER GRANULES
PROCEDE ANTIPOUSSIERE POUR GRANULES D'ENGRAIS

(30) Priorität: 07.06.1989 DE 3918523
(43) Veröffentlichungstag der Anmeldung: 12.06.1991
(73) Patentinhaber: KALI UND SALZ BETEILIGUNGS AKTIENGESELLSCHAFT, D-34111 Kassel (DE)
(72) Erfinder: SINGEWALD, Arno, D-3500 Kassel-Wilhelmshöhe (DE); WENDT, Otto, D-3101 Wathlingen (DE); NÜRNBERGER, Günter, D-3004 Isernhagen 1 (DE); PAETZ, Dieter, D-3160 Lehrte-Ahlten (DE); WALCZYK, Wolfgang, D-6431 Hohenroda (DE); MÜLLER, Klaus-Dieter, D-3503 Lohfelden 1 (DE)
(86) Internationale Anmeldenummer: EP9000797
(87) Internationale Veröffentlichungsnummer: WO9015038

(56) Entgegenhaltungen:
- CH-A- 481 676
- DD-A- 42 406
- DE-A- 2 037 647
- DE-C- 291 265
- DE-C- 621 739
- US-A- 3 195 999
- US-A- 4 689 251
- CHEMICAL ABSTRACTS, vol. 97, no. 16, Oktober 1982 Columbus, Ohio, USA, S. 146, Ref. No. 129993h & SU-A- 912644 (All-Union Scientific-Research Institute of Halurgy, Minsk)(15-03-1982) siehe Zusammenfassung
- CHEMICAL ABSTRACTS, vol. 98, no. 5, Januar 1983 Columbus, Ohio, USA, S. 592, Ref. No. 33818z & JP- A-57160988 (Kao Soap Co., Ltd.)(04-10-1982) siehe Zusammenfassung

## Beschreibung

Die Erfindung betrifft ein Verfahren zur Verhinderung einer Staubbildung beim Verladen oder Transportieren von Granulaten oder Pellets, insbesondere Dünger-Granulaten.

Düngemittel werden in steigendem Maße in granulierter Form hergestellt und in loser Schüttung transportiert. Zur Erzeugung der Granulate wird überwiegend die Trockenpreßgranulierung eingesetzt, die das Feinsalz zu Schülpen formt, aus denen anschließend durch Brechen und Nachsieben Granulate, vorzugsweise im Kornbereich 1,0 bis 4,0 mm, hergestellt werden.

Es ist bekannt, daß bei der Granulierung feinkörniger Stoffe zu Granulaten dem Ausgangsgemisch Granulier-Hilfsmittel zugesetzt werden.

So beschreibt die DE-AS 21 01 585 den Zusatz von Bindemitteln organischen oder anorganischen Charakters, wie Melasse, Stärke, Calciumchlorid sowie Alkali und Erdalkalisulfate und Nitrate bei dem Kompaktieren von Thomasphosphat in der Größenordnung von 2 bis 3 %, wobei bestimmte Temperaturbereiche und Zeitabläufe bei der eigentlichen Kompaktierung und Nachbehandlung zwingend vorgeschrieben sind.

Die DE-PS 36 18 058 beschreibt ein Verfahren zum Granulieren von wasserlöslichen Düngemitteln mit hohem Kieseritanteil, dadurch gekennzeichnet, daß dem Granuliergut lösliche und/oder leicht kolloid lösliche Substanzen aus der Klasse der Mono-, Diund Polysaccharide und/oder deren einfache hydrophile Derivate in fester Form oder als Lösung in der Menge zwischen 0,1 bis 5 % zugesetzt werden; ferner Saccharose in fester Form oder als zuckerreiche Melasse.

Die durch diese Art erzeugten Granulate weisen vor allem durch den angeschlossenen Brechvorgang scharfe Ecken und Kanten auf, die beim Transport bzw. Umschlag des Gutes abgerieben werden und eine während des Transportes und der Weiterverwendung unerwünschte Staubbildung ergeben, die eine untragbare Umweltbelastung zur Folge hat. Es ist bekannt, daß versucht wird, diesem Phänomen durch Feinstkornabsiebung vor der Verladung beim Erzeuger entgegenzuwirken. Die Praxis hat jedoch gezeigt, daß diese Nachbehandlung allein nicht ausreicht, den anhaftenden Restfeinstaub zu entfernen bzw. die Abriebfestigkeit der Kanten, Ecken und auch Seiten des Granulatkorns zu verbessern.

Aus der DD-PS 136 956 ist ein Verfahren bekannt, die Abriebfestigkeit von Kalidüngemittel-Granulaten dadurch zu verbessern, daß das Kalidüngemittel nach dem Granuliervorgang einer Nachbehandlung unterzogen wird, die darin besteht, nach einer Entstaubung im Wirbelbett eine anschließende Behandlung der Granulatoberfläche mit Wasser oder wässrigen Zusatzstoffen durchzuführen mit nachgeschalteter Trocknung und Kühlung der so behandelten Granulatkörper. Das Verfahren basiert auf der Möglichkeit, noch vorhandene instabile Spitzen oder Kanten durch Anlösen und Rekristallisation zu beseitigen und somit die Granulatoberfläche zu verfestigen.

Die DE-OS 30 03 183 ergänzt die vorgenannte Patentanmeldung durch die Feststellung auf einen Temperaturbereich von 80 - 100 °C, bei dem gemäß der OS ein optimaler Festigkeitsgewinn zu erzielen sein soll, wenn gleichzeitig eine Mindestverweilzeit von 10 sec in einer Atmosphäre hoher Feuchtigkeit gewährleistet ist.

Die beschriebene Behandlungsmethode erfordert einen hohen Aufwand für die der eigentlichen Granulierung und Absiebung nachgeschalteten Anlagen und ist nur anwendbar unmittelbar beim Erzeuger, da die für den Prozeß notwendige Wärme aus der Granulatproduktion stammt. Nicht anwendbar ist diese Methode also z.B. - ganz abgesehen von dem Investitionsaufwand und den dadurch bedingten Instandhaltungskosten - für granulierte Kaliprodukte, die für längere Zeit auf Zwischenlagern gelagert und von dort aus wieder verladen werden müssen. Bekannt ist, daß eine längere Lagerzeit und die damit verbundenen Einwirkungen physikalischer Art, wie Lagerdruck und Wechsel in der atmosphärischen Feuchte, auf derart behandelte Granulate negative Auswirkungen haben kann (Verbackungstendenz).

Der Erfindung liegt daher die Aufgabe zugrunde, ein Verfahren zur Verhinderung von Staubbildung beim Verladen und Transportieren von Granulaten bzw. Pellets, insbesondere Düngergranulaten, durch Zusatz eines Staubbindemittels zu schaffen, das alle an sie zu stellenden Forderungen, wie Umweltfreundlichkeit, lange Lagerfähigkeit der behandelten Granulate, einfache Anwendbarkeit, in optimaler Weise erfüllt.

Das wird erfindungsgemäß durch ein Verfahren erreicht, wie es Gegenstand des unabhängigen Anspruchs 1 ist.

Das anzuwendende Staubbindemittel muß eine Haftwirkung auf der Granulatoberfläche aufweisen, es darf durch übermäßige Feuchtigkeitsaufnahme nicht verdünnt werden und durch Trocknungsvorgänge nicht so viel Feuchtigkeit abgeben, daß seine Haft- und Klebewirkung verlorengeht.

Dabei werden in der Regel Substanzen verwendet, die bei Zimmertemperatur eine relativ hohe Viskosität aufweisen und wasserabweisende Eigenschaften besitzen. Solche viskosen Substanzen sollen einen möglichst hohen Flammpunkt aufweisen, da in der Regel diese viskosen Substanzen zur Erzielung einer guten Verteilung beim Aufbringen bei ca. 80°C verdüst werden müssen.

Die lange Lagerfähigkeit des in dieser Weise behandelten Gutes ist auf das langwirkende Staubbindevermögen des erfindungsgemäßen Staubbindemittels zurückzuführen.

Dabei übernimmt die Melasse die Haftwirkung und damit die Staubbindung, während die zweite organische Substanz durch die Steuerung des Wasserdampfdrucks der Lösung das als Film auf dem Granulat lagernde Staubbindemittel feucht und damit aktiv hält.

Bereits jeweils eine dieser Substanzen ist zusammen mit Melasse wirksam; besonders vorteilhaft sind jeweils zwei der drei Substanzen im Verhältnis von etwa 1 : 1, gemischt. In jedem Falle sollten die Substanzen Glyzerin bzw. Polyethylenglykol bzw. Triethanolamin allein oder als Gemisch jeweils zu mindestens 10 Gew.-% an der Gesamtmenge des Staubbindemittels beteiligt sein.

Nach der Erfindung wird ein homogenes Gemisch aus Melasse und der zweiten organischen Substanz im Mischungsverhältnis 1 : 0,3 bis 1 : 2 eingeseht.

Es wurde gefunden, daß zum Beispiel bei Kalidüngemittel-Granulaten schon eine geringe Zugabe, nämlich 0,6 bis 1,2 Gew.-%, vorzugsweise 0,7 bis 0,9 Gew.-% des Staubbindemittels, bezogen auf das Gewicht des Schüttgutes, die gewünschte optimale Wirkung ergibt. Bei dieser Anwendung auf Kalidünger-Granulate wird der vorgeschriebene Toleranzbereich des Wertstoffgehaltes (K₂O) nicht unterschritten.

Das Herstellen der homogenen Mischung kann problemlos in einem mit einem Rührwerk versehenen Behälter bei Zimmertemperatur durchgeführt werden.

Das Aufbringen auf die dem Verladevorgang unterworfenen und bereits durch Siebung vom Feinststaub befreiten Granulate kann bei entsprechender Druckanwendung und Düsenauswahl bei Zimmertemperatur bis zu einer maximalen Temperatur von 50°C erfolgen.

Im Gegensatz zu anderen, rein organischen nichtwässrigen Staubbindemitteln ist eine Erwärmung nicht unbedingt notwendig.

Die zu erzielende Staubbindung wird nach der im folgenden beschriebenen Methode bestimmt:

Proben des zu konditionierenden Granulats werden durch Absiebung von eventuell anhaftenden Partikeln befreit. Danach wird das zu untersuchende Bindemittel gleichmäßig verteilt und auf die jeweils 200 g umfassenden Proben aufgesprüht. Nach dem Auftragen fügt man exakt 1 %, bezogen auf das Granulatgewicht, an Staub (<0,2 mm) des Schüttgutes wieder hinzu und läßt die gesamten Proben in einer Probe flasche fünf Minuten rotierend mischen.

Die so erhaltenen Proben werden dann beispielsweise nach einer Lagerzeit untersucht, indem der gesamte Inhalt der Probeflasche auf einer Alpine-Luftstrahlmaschine mit eingelegtem 0,063 mm-Sieb abgesiebt wird.

Die Siebdauer muß exakt drei Minuten betragen. Anschließend wird das eingelegte und mit Staub beladene Filterpapier entweder ausgewogen oder bei löslichen Stäuben, wie z. B. Kalisalzen, der Staub ausgewaschen und die Menge über Titration bestimmt. Aus diesem Wert errechnet sich die Staubbindung in Prozent.

Bei den in der folgenden Tabelle aufgeführten Vergleichsversuchen wurden jeweils 9 kg Bindemittel auf eine t Kaliumsulfat-Preßgranulat bei einer Temperatur von 45 °C aufgesprüht.

Hierbei kamen die einzelnen Chemikalien in folgender Form zum Einsatz:
- Melasse mit einem Feststoffgehalt von 47 %
- Glyzerin (Trihydroxipropan) einfach destilliert, 86 - 88 %ig
Dichte bei 20 °C = 1,23 g/cm³; Flammpunkt 180 °C
- Polyethylenglykol
Dichte bei 20 °C = 1,13 g/cm³; mit einer mittleren Molmasse von 400 g/Mol; Flammpunkt: > 100 °C
- Triethanolamin
N (CH₂CH₂OH)₃;
Dichte bei 25 °C = 1,11 g/cm³; Gehalt 85 %;
max. 0,5 % H₂O; ca. 15 % Iminobisethanol

**Tabelle**

| Staubbindung im Verhältnis zur Nullprobe in % | | |
|---|---|---|
| | nach 1 Woche | nach 6 Wochen |
| 1. Nullprobe | 0 | 0 |
| 2. Melasse (100 %) | 62 | 66 |
| 3. Glyzerin (100 %) | 61 | 40 |
| 4. Polyethylenglykol (100 %) | 56 | 49 |
| 5. Melasse/Glyzerin (1 : 1) | 87 | 86 |
| 6. Melasse/Polyethylenglykol (1 : 1) | 87 | 82 |
| 7. Melasse/Polyethylenglykol (2 : 1) | 89 | 87 |
| 8. Melasse/Triethanolamin (1 : 1) | 96 | 86 |
| 9. Melasse/Glyzerin/Polyethylenglykol (1 : 0,5 : 0,5) | 86 | 80 |
| 10. Melasse/Glyzerin/Triethanolamin (1 : 0,5 : 0,5) | 99 | 90 |
| 11. Melasse/Polyethylenglykol/Triethanolamin (1 : 0,5 : 0,5) | 96 | 87 |

Es zeigt sich, daß im Vergleich mit einer unbehandelten Probe eine sehr gute Staubbindung erzielbar ist.
Dabei sind die Einzelsubstanzen allein bei weitem nicht so wirksam wie die Mischungen.

Zum einen wirken die Mischungen wesentlich intensiver und vollständiger, zum anderen hält die Wirkung länger an. Noch nach 6 Wochen bleiben hohe Staubbindungswerte erhalten.

Die anschließend aufgeführten Anwendungsbeispiele beschreiben die Erfindung, ohne sie zu begrenzen.

### Beispiel 1

Ein aus der Pressgranulierung mit nachgeschalteter Absiebung kommendes Kaliumsulfat-Granulat wird unkonditioniert im Lagerhaus gelagert. Bei einer Guttemperatur von 40 °C wird das Granulat vor der Verladung in loser Schüttung einer Feinststaubabsiebung unterworfen und dieser nachgeschaltet, mit dem Staubbindemittel behandelt,und zwar vor der Abwurfstelle des Bandes vor Aufnahme in den Transportbehälter; dort befinden sich Flachstrahlzerstäubungsdüsen, die so angeordnet sind, daß der Abwurfschleier allseitig vom Sprühkegel erfaßt wird. Diesem nachgeordnet sind Umlenkvorrichtungen, um das benetzte Verladegut durchzumischen. Der Zerstäubungsdruck beträgt ca. 3 - 5 bar.

Die Medientemperatur liegt im Mittel bei Zimmertemperatur. Eingesetzt wird eine Mischung aus 50 % Melasse (Gehalt 47 %) und 50 % Glyzerin (mit einem Gehalt von 86 % und einer Dichte von 1,23 g/cm³) in einer Menge von 0,8 %, bezogen auf das zu konditionierende K₂SO₄-Granulat.

### Beispiel 2

Das aus der Pressgranulierung mit nachgeschalteter Absiebung kommende Granulat wird direkt dem Verladeprozeß zugeführt. Nach der auch hierbei durchgeführten Feinstabsiebung wird - wie unter Beispiel 1 beschrieben - das Konditionierungsmittel aufgebracht, in einer Menge von 4 kg Melasse und 4 kg Polyethylenglykol (Dichte = 1,13 und einer mittleren Molmasse = 400 g/mol) pro t Granulat, jedoch kann hierbei, bedingt durch die Temperatur des frisch produzierten Granulats, auf die Erwärmung des aufgebrachten Konditionierungsmittels verzichtet werden, wenn ein Zerstäubungsdruck von mindestens 3 bis 5 bar zur Verfügung steht.

## Patentansprüche

1. Verfahren zur Verhinderung einer Staubbildung beim Verladen oder Transportieren von Granulaten oder Pellets, insbesondere Düngergranulaten, durch Zusatz eines Staubbindemittels, dadurch gekennzeichnet, daß als Staubbindemittel ein flüssiges Gemisch aus Melasse und Glycerin bzw. Polyethylenglykol bzw. Triethanolamin als zweite organische Substanz in feinstverteilter Form zugesetzt und in einer Menge von 0,6 bis 1,2 Gew.-%, bezogen auf die Menge der Granulate, eingesetzt wird, wobei das Mengenverhältnis zwischen Melasse und der zweiten organischen Substanz 1:0,3 bis 1:2 beträgt.

2. Verfahren nach Anspruch 1, dadurch gekennzeichnet, daß Glycerin bzw. Polyethylenglykol bzw. Triethanolamin allein oder als Gemisch eingesetzt werden und diese Substanzen jeweils zu mindestens 10 Gew.-% an der Gesamtmenge des Staubbindemittels beteiligt sind.

3. Verfahren nach Anspruch 1, dadurch gekennzeichnet, daß jeweils zwei der Substanzen Glycerin, Polyethylenglykol und Triethanolamin im Verhältnis von etwa 1:1 gemischt und zur Melasse zugegeben werden.

## Revendications

1. Procédé pour empêcher qu'il se forme de la poussière lors du chargement ou du transport de granulés ou de boulettes, en particulier de granulés d'engrais, par addition d'un agent liant la poussière, caractérisé en ce qu'on ajoute comme agent liant la poussière, un mélange liquide de mélasse et de glycérol ou de polyéthylèneglycol ou de triéthanolamine, comme seconde substance organique sous une forme très finement divisée, et en ce qu'on l'utilise en une quantité de 0,6 à 1,2% en poids par rapport à la quantité des granulés, le rapport pondéral entre la mélasse et la seconde substance organique étant de 1:0,3 à 1:2.

2. Procédé selon la revendication 1, caractérisé en ce que le glycérol ou le polyéthylèneglycol ou la triéthanolamine sont utilisés seuls ou en mélanges, et en ce que ces substances participent chacune pour au moins 10% en poids à la quantité totale de l'agent liant la poussière.

3. Procédé selon la revendication 1, caractérisé en ce qu'on mélange deux des substances glycérol, polyéthylèneglycol et triéthanolamine dans le rapport d'environ 1:1, et en ce qu'on les ajoute à la mélasse.

## Claims

1. A method of preventing dust formation when handling or transporting granules or pellets, in particular fertiliser granules, by adding a dust-binding agent, characterised in that a liquid mixture of molasses and glycerin or polyethylene glycol or triethanolamine as a second organic substance in very finely divided form is added as the dust-binding agent and is used in an amount of from 0.6 to 1.2% by weight with respect to the weight of the granules, wherein the quantitative ratio between molasses and the second organic substance is 1:0.3 to 1:2.

2. A method according to claim 1 characterised in that glycerin or polyethylene glycol or triethanolamine are used alone or as a mixture and those substances are each involved respectively in at least 10% by weight in the total amount of the dust-binding agent.

3. A method according to claim 1 characterised in that in each case two of the substances glycerin, polyethylene glycol and triethanolamine are mixed in a ratio of about 1:1 and added to the molasses.
